(19) Europäisches Patentamt / European Patent Office / Office européen des brevets

(11) **EP 2 026 151 A1**

(12) **EUROPEAN PATENT APPLICATION**

(43) Date of publication:
**18.02.2009 Bulletin 2009/08**

(51) Int Cl.:
**G05B 19/18** (2006.01)

(21) Application number: **08161359.8**

(22) Date of filing: **29.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.07.2007 JP 2007197589**

(71) Applicant: **Star Micronics CO., LTD.**
**Shizuoka-shi, Shizuoka 422-8654 (JP)**

(72) Inventor: **Yazaki, Noriyuki**
**Shizuoka-shi**
**Shizuoka 422-8654 (JP)**

(74) Representative: **Skone James, Robert Edmund**
**Gill Jennings & Every LLP**
**Broadgate House**
**7 Eldon Street**
**London EC2M 7LH (GB)**

(54) **Movement control apparatus for machine tool**

(57)     A movement control apparatus for a machine tool includes a travel boundary arc setting unit and a control unit. The machine tool includes a tool post that supports plurality of tools, and a drive unit adapted to relatively move at least one of the tool post and the workpiece in a direction of a first axis and in a direction of a second axis that intersects the first axis to change a tool. The travel boundary arc setting unit sets an arc so that the arc is inscribed in the first and the second axes and an axial center of the workpiece passes through a position distant from a corner portion of a tool by a radius of the workpiece. The control unit is adapted to control the drive unit so that the workpiece travels along a travel locus outside the arc while changing a tool.

*FIG. 1*

## Description

The present invention relates to a movement control apparatus for a machine tool such as a lathe that has a tool post with a plurality of tools arranged in parallel with each other, wherein at least one of the tool post and the workpiece is relatively moved to change tools for machining a workpiece in a direction of two axes intersecting one another.

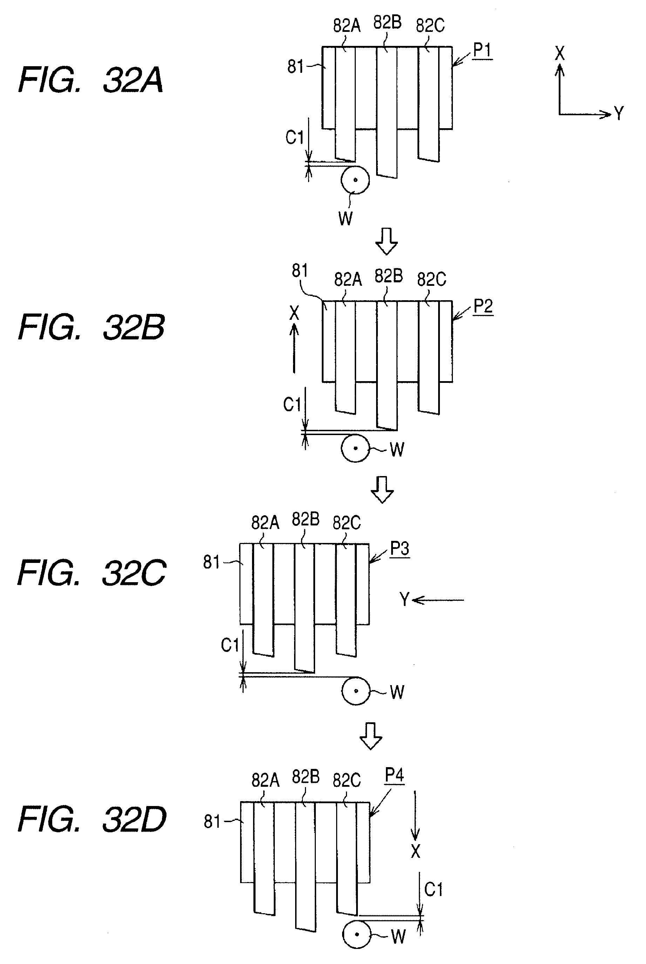

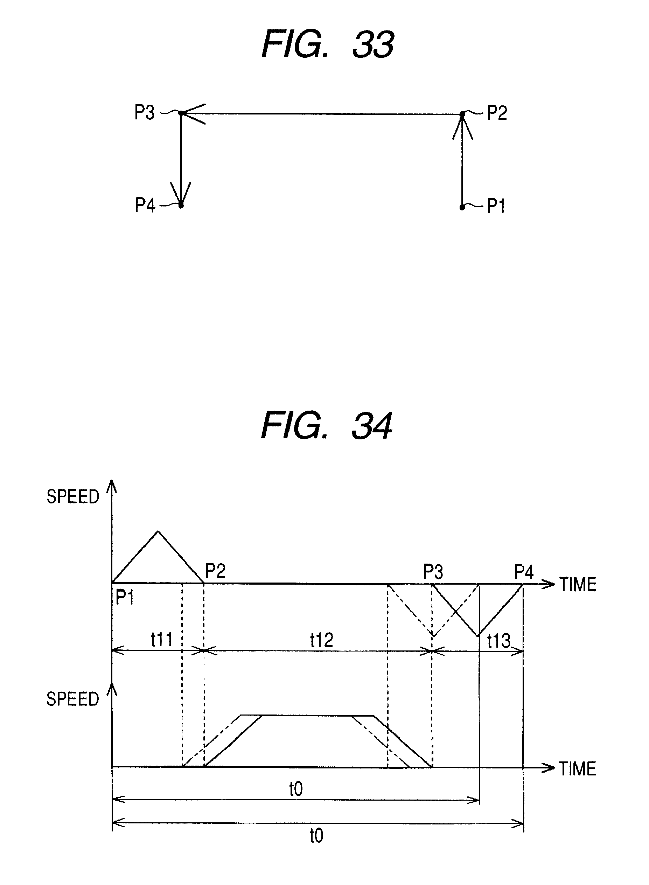

Conventionally, in the case of changing tools to machine a workpiece in a machine tool like a lathe, a movement control method shown in Figs. 32 and 33 is employed. In case of this machine tool, the tool post 81, in which a plurality of tools 82A, 82B, 82C such as turning tools are arranged in parallel with each other, is adapted to move in a direction of X-axis, which is the advance and retreat direction of the tools 82A to 82C, and is also adapted to travel in a direction of Y-axis, the tool parallel arrangement direction. For example, after the completion of machining the workpiece W by the tool 82A, when the tool 82A is to be changed to the tool 82C while skipping the tool 82B whose nose (leading end) is protruded, first, as shown in Fig. 32A, the tool post 81 is positioned at the first position P1 at which the nose of the tool 82A has a given clearance C1 with respect to an outer peripheral surface of the workpiece W.

After that, as shown in Fig. 32B, the tool post 81 is moved in the direction of the X-axis and positioned at a second position P2 at which the nose of the tool 82B to be skipped has the given clearance C1 with respect to the outer peripheral surface of the workpiece W. This second position P2 is a transit position where the most projecting tool 82B and the workpiece W do not interfere with each other while the tool post 81 is moved in the direction of the Y-axis. Successively, as shown in Fig. 32C, while the tool post 81 is moved in the Y-axis direction while skipping the tool 82B, it is positioned at a third position P3 where the nose of the tool 82C exists on an X-axis direction extended line passing through the center of the workpiece W. Further, as shown in Fig. 32D, the tool post 81 is advanced in the direction of the X-axis and positioned at a fourth position P4 at which the nose of the tool 82C has the given clearance C1 with respect to the outer peripheral surface of the workpiece W.

However, in the conventional movement control method described above, the following problems may be occurred. The tool post 81 is, at the second position P2 and the third position P3, is stopped and switched in the moving directions between the X-axis and Y-axis directions. Therefore, it takes long time to change tools. That is, as shown by the solid lines in Figs. 33 and 34, a moving time t0 needed for changing tools is t11 + t12 + t13 at the shortest, wherein t11 is a moving time needed for the tool post 81 to move from the first position P1 to the second position P2, t12 is a moving time needed for the tool post 81 to move from the second position P2 to the third position P3 and t13 is a moving time needed for the tool post 81 to move from the third position P3 to the fourth position P4.

On the other hand, JP-A-9-262742 discloses a movement control method of a tool by which a moving time can be shortened when moving motions of the tools in two axial directions are overlapped in a predetermined time zone. Further, JP-A-11-104934 discloses a movement control method of a tool to shorten the moving time where the tool moves from a present position to a tool replacing position via an approaching position so determined as to prevent the interference with other members. Movement in two directions at the approaching position is done by rapid traverse without stop.

Further, JP-A-2006-24174 discloses a travel control method of a tool by which the traveling time can be shortened in such a manner that a moving member is moved at a rapid traverse speed by a first axis drive unit to a direction change point where interference between the moving member and other members are avoided, and then the moving member is moved slowly at an accelerating or decelerating speed equal to or lower then the maximum accelerating or decelerating speed of the first axis drive unit within the moving time of a second axis drive unit, thereby shortening the moving time of the moving member.

However, the following problems may be occurred in the conventional movement control methods. The JP-A-9-262742 discloses a method in which tools are moved in such a manner that an X-axial movement and a Y-axial movement overlap. However, the JP-A-9-262742 does not disclose a method of setting the travel route for the tool to prevent interference with other components such as a workpiece and so forth. Therefore, when the method described in the JP-A-9-262742 is applied to the tool change shown in Fig. 32, the tool possibly interferes with other members such as a workpiece while changing over to a selected tool.

In the method described in the JP-A-11-104934, when rapid traverse movements in two directions are actually overlapped, the travel route is curved in the neighborhood of the approach position. Therefore, the tool can not accurately pass through the approach position. In order to make the tool accurately pass through the approach position while avoiding interference with other components, it is necessary to once stop the rapid traverse movements in two directions at the approach position to switch directions. As a result, it is impossible to shorten the travel time.

In the method described in the JP-A-2006-24174, the moving member is moved in two axial directions at the same time. However, the moving member makes a detour while drawing a locus swelling like an arcuate shape in the outside region of the linear-shaped travel route. Therefore, a moving stroke of the moving object is increased and a large moving space is required.

The present invention has been accomplished to solve the above problems. An object of the invention is to provide a movement control apparatus for a machine tool capable of making a tool post and a workpiece relatively move in a short period of time along a short travel route in which the tool post and the workpiece do not interfere with each other at the time of changing a tool.

According to a first aspect of the invention, there is provided a movement control apparatus for a machine tool, comprising: a tool post with a plurality of tools arranged parallel for machining a workpiece; a drive unit adapted to move at least one of the tool post and the workpiece in a direction of a first axis and in a direction of a second axis that intersects the first axis to make a relative movement happen between the workpiece and the tool post, and adapted to overlap the movement in the first axis direction and the movement in the second axis direction to make the relative movement happen in such a manner that the workpiece moves around the periphery of the tool post, thereby changing the tools; a travel boundary arc setting unit adapted to set a travel boundary arc in such a manner that the travel boundary arc is inscribed in the first and the second axes and an axial center of the workpiece or a forward end center of the workpiece passes through a position distant from a corner portion of a tool by a radius of the workpiece; and a control unit adapted to control the drive unit to make the relative movement happen in such a manner that the workpiece moves around the periphery of the tool post from the first axis to the second axis along a travel locus outside the travel boundary arc.

A non-columnar workpiece may be also used as the workpiece including a workpiece whose shape at cross section is hexagon, octagon and other polygon shapes. Such polygonal workpiece is handled as a columnar workpiece, having a circumference passing through the tops of the corners on the outer peripheral surface of the workpiece. Accordingly, for example, a radius of the octagonal-prism-shaped workpiece is a distance from the axial center to the top of one of the corners.

According to the movement control apparatus of the invention, before changing the tool, a travel boundary arc is set in such a manner that the tool post and the workpiece is adapted to be relatively moved without interference one another when the second axis operation overlap the first axis operation. While changing the tool, the relative travel locus of the workpiece is formed from the first axis to the second axis through the travel locus drawn outside the travel boundary arc around the periphery of the tool post. Therefore, no interference occurs between the tool post and the workpiece at the time of changing the tool and the workpiece can relatively move in a short period of time along the short travel route. Therefore, a relative position of the tool on the tool post and the workpiece can be changed over in a short period of time. Accordingly, the productivity of the machine tool can be enhanced.

According to a second aspect of the invention, the travel boundary arc setting unit sets a plurality of travel boundary arcs corresponding respectively to corner portions of the plurality of tools, selects the travel boundary arc of the smallest radius, and sets the selected travel boundary arc.

According to the movement control apparatus of the invention, since the travel boundary arc of smallest radius is set, the travel boundary arc is located most distant from a corner portion of a tool, thereby surely avoiding risk of interference.

According to a third aspect of the invention, the travel boundary arc setting unit sets the travel boundary arc in such a manner that the travel boundary arc is inscribed in the first and the second axes and circumscribed with an arc drawn by the radius of the workpiece assuming the corner portion of the tool closest to the first and second axes as the center of a circle.

According to the movement control apparatus of the invention, the axial line of the workpiece is extended in a direction perpendicular to the advance and retreat direction of the tool and to the tool arrangement direction in such a manner that the workpiece is machined on the outer peripheral surface by the tool mounted on the tool post.

According to a fourth aspect of the invention, the movement control apparatus further comprising: a distance calculation unit adapted to calculate distances between the tool and an outer peripheral surface of the workpiece on the first and the second axes when the workpiece and the tool post are relatively moved in the first and second axis directions, wherein: the travel boundary arc setting unit adapted to calculate the radius R1 of the travel boundary arc by formula 1,

[Formula 1]

$$R1 = (w + a + b) + \sqrt{2ab}$$

where w is the radius of the workpiece, a is the distance between the tool and the workpiece on the first axis, b is the distance between the tool and the workpiece on the second axis, and the control unit adapted to control the drive unit in such a manner that a travel locus of the workpiece from the first axis to the second axis while changing a tool is located outside an arc of the radius R1.

According to the movement control apparatus of the invention, the radius R1 of the travel boundary arc is accurately calculated by the predetermined formula.

According to a fifth aspect of the invention, the travel boundary arc setting unit is adapted to set the travel boundary arc in such a manner that the travel boundary arc is inscribed in the first and the second axes and that the travel boundary arc passes through a position distant from a corner portion of the tool closest to the first and the second axes by a distance corresponding to the radius of the workpiece in a tool arrangement direction.

According to the movement control apparatus of the invention, the axial line of the workpiece is extended in a direction parallel to the advance and retreat direction of the tool in such a manner that the workpiece is machined on the end surface by the tool mounted on the tool post.

According to a sixth aspect of the invention, the movement control apparatus further comprising: a distance calculation unit adapted to calculate a distance between the tool and an outer peripheral surface of the workpiece on one of the first and the second axes parallel to the tool arrangement direction and to calculate a distance between the tool and the other of the first and the second axes that is parallel to a tool advance and retreat direction when the workpiece and the tool post are relatively moved in the first and second axis directions, wherein: the travel boundary arc setting unit adapted to calculate the radius R2 of the travel boundary arc by formula 2,

[Formula 2]

$$R2 = (a + b) + \sqrt{2ab}$$

where w is the radius of the workpiece, a is the distance between the tool and the workpiece on one of the first and the second axes, and b is the distance between the tool and the other axis; and the control unit is adapted to control the drive unit in such a manner that a travel locus of the workpiece from the first axis to the second axis while changing a tool is located outside an arc of the radius R2.

According to the movement control apparatus of the invention, the radius R2 of the travel boundary arc is accurately calculated by the predetermined formula.

According to a seventh aspect of the invention, the drive unit is adapted to make the relative movement between the workpiece and the tool post by rapid traverse when the first axis operation and the second axis operation overlap, and

the control unit is adapted to control the drive unit to start the overlap movement (the second axis operation) at a timing previously set.

According to the movement control apparatus of the invention, the workpiece is relatively moved in the second axis direction at a predetermined timing while moved in the first axis direction by rapid traverse, thereby drawing an approximate arc locus based on the travel boundary arc. Relative movement between the workpiece and the tool post is available by rapid traverse along a travel route free from interference, thereby improving productivity of the machine tool.

According to a eighth aspect of the invention, the movement control apparatus further comprising: a first calculation unit adapted to calculate a plurality of tangents with respect to the travel boundary arc and intersections of the plurality of tangents; and a second calculation unit adapted to calculate a first time and a second time, wherein the first time and a second time are counted from the start of the relative movement until when a travel locus reaches a first axis direction line parallel to the first axis and a second axis direction line parallel to the second axis respectively passing through the intersections; wherein the control unit is adapted to delay a previously set timing to start the overlap movement (the second axis operation) in such a manner that the first time and the second time are equal to each other when the second time is shorter than the first time.

According to the movement control apparatus of the invention, the relative travel locus of the workpiece is determined whether to be inside the intersection located outside the travel boundary arc according to the calculation results by the first and second calculating units. When the workpiece is determined to pass inside the intersection, the route is modified by the timing setting unit in a manner that it passes outside the intersection, thereby assuring an appropriate setting of the overlap movement start timing.

Embodiment may be described in detail with reference to the accompanying drawings, in which:

FIG. 1 is a perspective view showing a primary portion of a machine tool having a movement control apparatus of the first embodiment;
Fig. 2 is a block diagram showing a circuit configuration of the movement control apparatus of Fig. 1;
Figs. 3A and 3B are schematic illustrations respectively showing a travel boundary arc at the time of changing a tool in the movement control apparatus of the first embodiment;
Fig. 4 is a flow chart showing a control program at the time of changing a tool in the movement control apparatus of the first embodiment;
Fig. 5 is a schematic illustration showing an operation of S1 in the flow chart of Fig. 4;
Fig. 6 is a schematic illustration showing an operation of S2 in the flow chart of Fig. 4;
Fig. 7 is a schematic illustration showing an operation of S3 in the flow chart of Fig. 4;
Fig. 8 is a schematic illustration showing an operation of S4 in the flow chart of Fig. 4;
Fig. 9 is a schematic illustration showing an operation of S5 in the flow chart of Fig. 4;
Fig. 10 is a schematic illustration showing an operation of S7 in the flow chart of Fig. 4;
Fig. 11 is a schematic illustration showing an operation of S8 in the flow chart of Fig. 4;
Fig. 12 is a schematic illustration showing an operation of S9 in the flow chart of Fig. 4;
Fig. 13 is a schematic illustration showing an operation of S13 in the flow chart of Fig. 4;
Fig. 14 is a flow chart showing a sub-routine of the approximate arc control in the flow chart of Fig. 4;
Fig. 15 is a diagram showing a relationship between the overlap movement start timing and the approximate arc locus in the approximate arc control of Fig. 14;

Fig. 16 is a diagram showing a relationship between the travel boundary arc and the approximate arc locus;

Figs. 17A to 17D are diagrams respectively showing a relationship between the travel boundary arc and the approximate arc in setting of the overlap movement start timing;

Figs. 18A and 18B are diagrams respectively showing a relationship between the first time and the second time in setting of the overlap movement start timing;

Figs. 19A and 19B are schematic illustrations respectively showing a travel boundary arc at the time of changing operation of the tool in the movement control apparatus of the second embodiment;

Fig. 20 is a flow chart showing a control program at the time of changing the tool in the movement control apparatus of the second embodiment;

Fig. 21 is a schematic illustration showing an operation of S101 in the flow chart of Fig. 20;

Fig. 22 is a schematic illustration showing an operation of S102 in the flow chart of Fig. 20;

Fig. 23 is a schematic illustration showing an operation of S103 in the flow chart of Fig. 20;

Fig. 24 is a schematic illustration showing an operation of S104 in the flow chart of Fig. 20;

Fig. 25 is a schematic illustration showing an operation of S106 in the flow chart of Fig. 20;

Fig. 26 is a schematic illustration showing an operation of S108 in the flow chart of Fig. 20;

Fig. 27 is a schematic illustration showing an operation of S109 in the flow chart of Fig. 20;

Fig. 28 is a schematic illustration showing an operation of S110 in the flow chart of Fig. 20;

Fig. 29 is a schematic illustration showing an operation of S114 in the flow chart of Fig. 20;

Fig. 30 is a schematic illustration in the case of performing the arc interpolation control instead of the approximate arc control of Fig. 14;

Fig. 31 is another schematic illustration in the case of performing the arc interpolation control instead of the approximate arc control of Fig. 14;

Figs. 32A to 32D are partial front views successively showing tool changing operations in order in a conventional machine tool;

Fig. 33 is a diagram showing a travel route of the tool in the tool changing operation shown in Fig. 32; and

Fig. 34 is a graph showing a speed change at the time of tool movement in Fig. 33.

Referring to the drawings, explanations will be made into specific embodiments of the invention.

(First Embodiment)

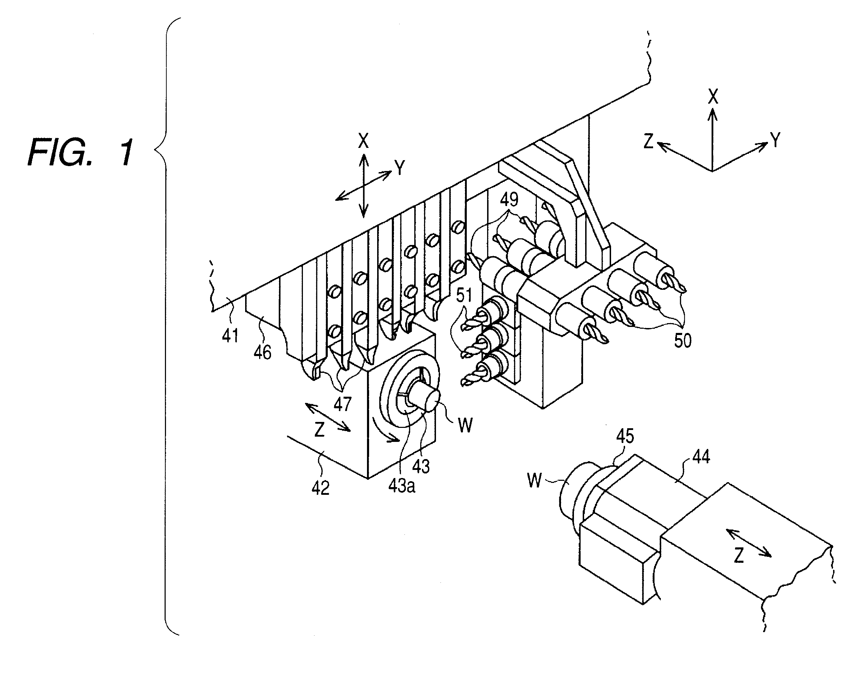

First of all, the first embodiment is explained below referring to Figs. 1 to 18.

As shown in Fig. 1, in the machine tool of the first embodiment, a headstock 42 is mounted on a frame 41 being capable of traveling in a direction of Z-axis. In the headstock 42, a main spindle 43 extending in the direction of Z-axis is pivotally supported. A back attachment 44 is mounted on the frame 41 being opposed to the headstock 42 in such a manner that the back attachment 44 can be moved in the direction of Z-axis. In the back attachment 44, a sub spindle 45 extending in the direction of Z-axis is pivotally supported. A collet 43a capable of holding the columnar workpiece W is attached to the main spindle 43. The collet 43a, which is not shown in the drawing, capable of holding the columnar workpiece W is also attached to the sub spindle 45.

Between the headstock 42 and the back attachment 44, on the frame 41, a tool post 46 is movably mounted so that it can be moved in the directions of X-axis and Y-axis perpendicular to the direction of Z-axis that is a traveling direction of the headstock 42. On the tool post 46, a tool 47 is mounted. The tool 47 includes a plurality of turning tools extending in the direction of X-axis. The turning tools are arranged in the direction of Y-axis in parallel with each other at certain intervals. The tool 47 including the plurality of turning tools is used to cut the workpiece W held by the main spindle 43 on the outer peripheral surface of the workpiece W.

On the tool post 46, tools 49, 50, 51 including a plurality of drills and reamers are arranged adjacent to the tool 47, extending in the direction of Z-axis or Y-axis. The tools 49 to 51 are arranged in parallel with each other at certain intervals in the direction of Y-axis or X-axis. These tools 49 to 51 are used to machine the workpiece W held by the main spindle 43 on the side surface or the end surface or to machine the workpiece W held by the sub spindle 45 on the end surface.

Next, explanations will be made into the control unit 55 and the related configuration for controlling an operation of the machine tool configured as described above.

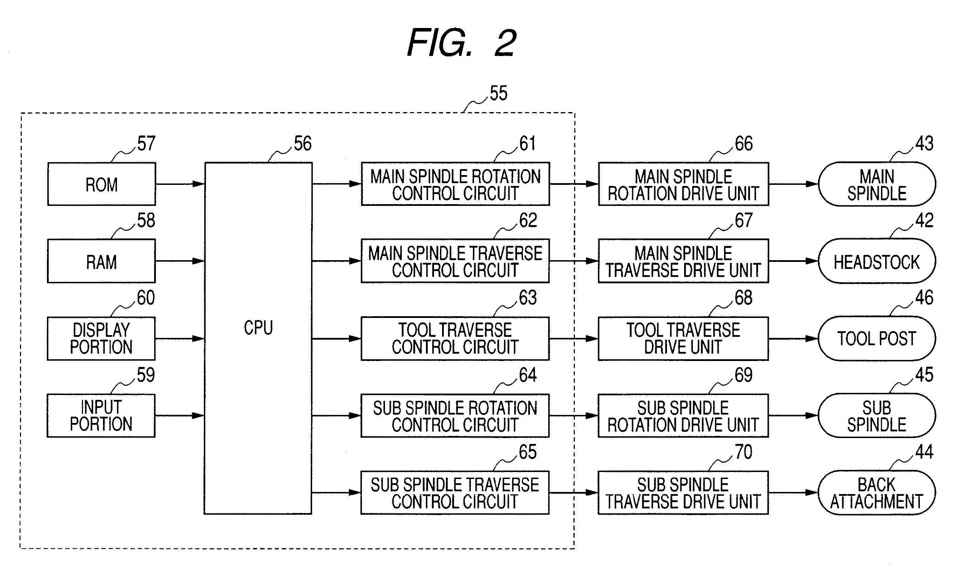

As shown in Fig. 2, this control unit 55 includes: a central processing unit (CPU) 56; a read-only memory (ROM) 57; a random access memory (RAM) 58; an input portion 59; a display portion 60; a main spindle rotation control circuit 61; a main spindle traverse control circuit 62; a tool traverse control circuit 63; a sub spindle rotation control circuit 64; and a sub spindle traverse control circuit 65. In this embodiment, the above CPU 56, ROM 57 and RAM 58 configures a boundary arc setting unit, a distance calculation unit, a first calculation unit, a second calculation unit and a control unit.

The input portion 59 includes a keyboard having numeric keys and so forth. This keyboard is used to input various machining-related data such as a type and a size of the workpiece W. The display portion 60 includes a display unit such as a crystal liquid display.

CPU 56 described above outputs commands of operation to the main spindle rotation control circuit 61, the main spindle traverse control circuit 62, the tool traverse control circuit 63, the sub spindle rotation control circuit 64, and the sub spindle traverse control circuit 65. In response to the commands, the main spindle rotation drive unit 66, the main spindle traverse drive unit 67, the tool traverse drive unit 68, the sub spindle rotation drive unit 69 and the sub spindle traverse drive unit 70 are activated to operate the main spindle 43, the headstock 42, the tool post 46, the sub spindle 45 and the back attachment 44 respectively. The drive unit 66 to 70 comprises driving motor and other components respectively.

At the time of changing the tool 47 mounted on the tool post 46 with respect to the workpiece W, the tool traverse drive unit 68 moves the tool post 46 in the direction of X-axis or Y-axis. Due to the foregoing, the tool post 46 is moved in two axial directions: the advance and retreat direction of the tool 47 with respect to the workpiece W and the tool arrangement direction of the tools 47. Accordingly, in this first embodiment, the tool traverse drive unit 68drives the tool post 46 so that the tool post 46 can relatively move in the directions of X-axis and Y-axis with respect to the workpiece W.

In this first embodiment and the embodiments described later, at the time of changing the tool 47, only needed is a relative movement between the tool post 46 for supporting the tool 47 and the headstock 42 for supporting the workpiece W. Therefore, only one of the tool post 46 and the headstock 42 may be moved or both of them may be moved in such manner as producing relative movement between the tool post 46 and the headstock 42.

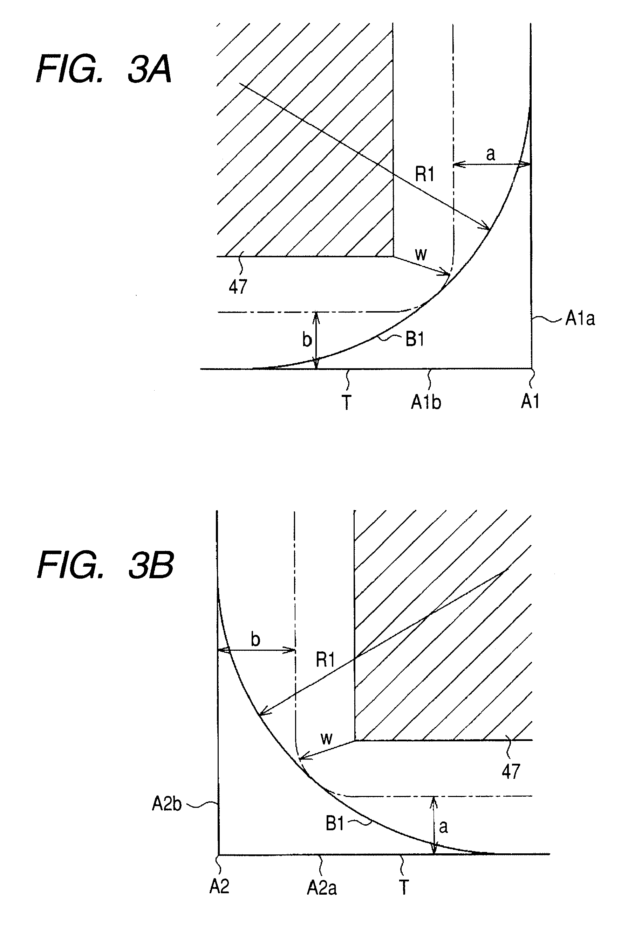

ROM 57 stores various control programs for machining the workpiece. CPU 56 controls a progress of the programs stored in ROM 57. RAM 58temporarily stores the machining program and various data, which are manually input or calculated by CPU 56. For example, RAM 58 stores a tool pitch of the tool 47, a shank width and the height of tool nose, as well as data of the radius w of the workpiece W, data of the distances a, b shown in Fig. 3 later calculated by CPU 56 and data of the radius R1 of the travel boundary arc B1. These data are stored in the respectively predetermined regions.

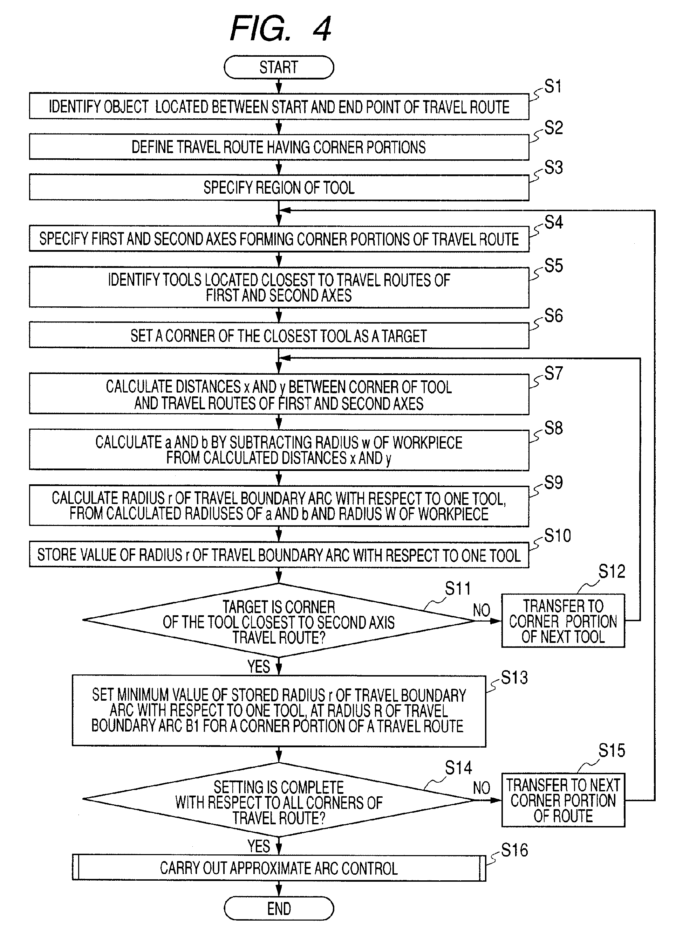

Further, RAM 58 includes: a temporarily storing region in which a result of the calculation in the program shown in the flow chart of Fig. 4 described later; and a working region in which the result of the calculation is stored so that it can be used for controlling an action of the tool post 46.

Referring to Fig. 4, explanations will be made into an operation procedure used in the case where the tool 47 such as a turning tool used for machining an outer peripheral surface of the workpiece W is to be changed in the machine tool configured as described above. This routine shown in Fig. 4 proceeds when the program stored in ROM 57 is controlled by CPU 56.

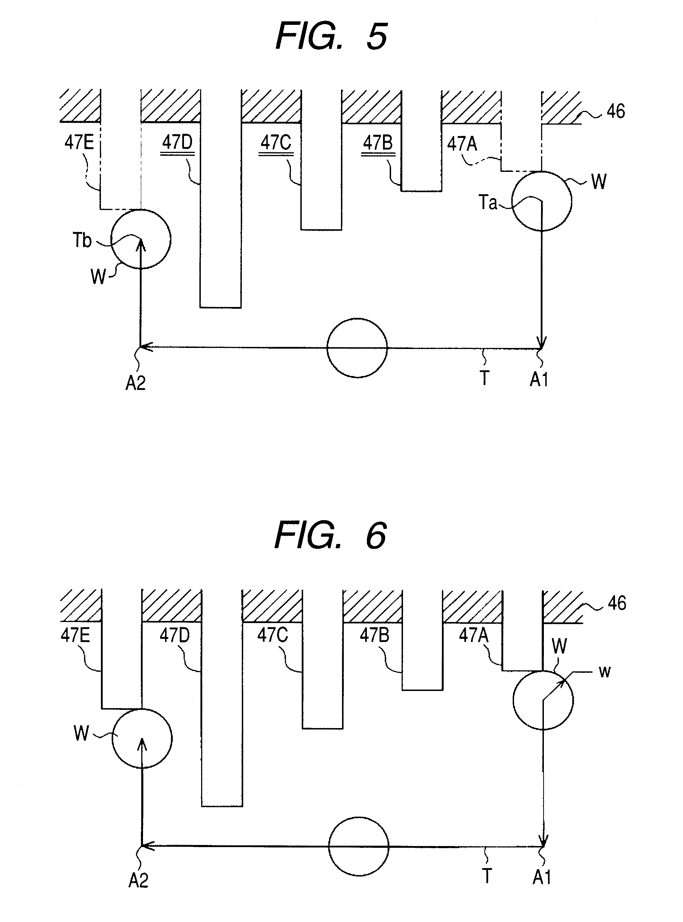

In the machine tool shown in Fig. 1, the columnar workpiece W is clamped at a fixed position with respect to the X-axis and Y-axis directions. Further, the tool post 46 for supporting the tool 47 travels in two directions of X-axis and Y-axis with respect to the headstock 42 for supporting the workpiece W, so that the tool 47 can be changed. In this case, in order to change the tool 47, only needed is a relative movement between the tool post 46 and the headstock 42. Accordingly, the tool post 46 or the workpiece W may travel singly. Alternatively, both the tool post 46 and the workpiece W may travel together. In order to simplify the explanations, the following explanations of the change operation are made on the assumption that the headstock 42 holding the workpiece W is moved in two axial directions of X-axis and Y-axis with respect to the tool post 46 and that the tool post 46 is located at a fixed position with respect to the X-axis and Y-axis directions. In the schematic illustrations of Figs. 5 to 13 for explaining the operation related to the steps shown in Fig. 4, in order to simplify the explanations, a nose (leading end) of the tool 47 is assumed to have a rectangular shape. This rectangle is formed based on the tool width and the most protruding position of the tool with respect to the tool arrangement direction and the direction perpendicular to the tool arrangement direction.

When a predetermined operation for changing tools (from 47A to 47E) is entered by the input portion 59 or when a command for changing tools is given by the machining program, in step S1 (The terminology "step" will be omitted hereinafter) as shown in Fig. 4, attaching positions of the tools 47A to 47E as shown in Fig. 5 are recognized and the tools 47B, 47C, 4 7 Dare identified as they exist between the start point Ta and the finish point Tb of the travel route T of the axial center of the workpiece W .

Next, in S2, the travel route T having corner portions is defined to allow the identified tools to be skipped. For example, as shown in Fig. 6, after the completion of machining the workpiece W by the tool 47A, the tools 47B, 47C, 47D are skipped and the tool is changed to the tool 47E. In this case, the travel route T having right-angled corner portions A1, A2 is defined. In this case, the positions of the corner portions A1, A2 in the tool advance and retreat direction (the direction of X-axis) are set so that the most protruding tool 47D and the workpiece W can not interfere with each other in the case where the tool 47 is moved in the tool arrangement direction (the direction of Y-axis).

In this case, concerning S2 and S1, the order of processing may be reversed. That is, the travel route T of the axial center of the workpiece W may be set in S1 and the tool 47 existing in the travel route T may be identified in S2.

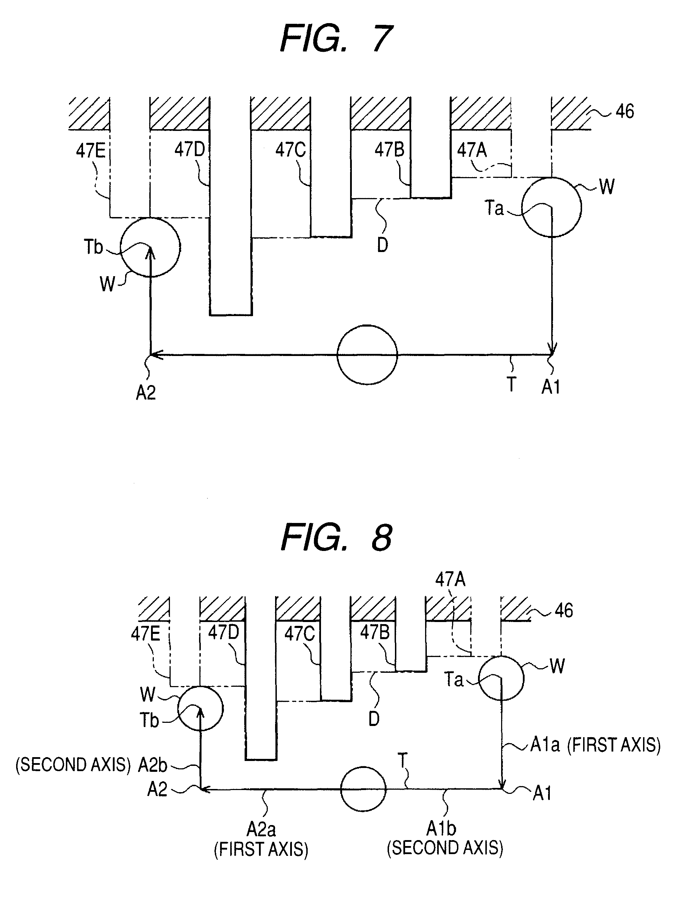

Next, in S3, as shown by the two-dotted chain line in Fig. 7, the region D of the tools 47A to 47E is specified according to the profile data of the tool. In the case where the tool is lower than the adjoining tool, the region D of the lower tool is defined as an in-between space with respect to the adjoining higher tool with the height of the tool nose of the lower tool assumed as the height of the region.

In S4, as shown in Fig. 8, the first axis A1a and the second axis A1b perpendicular to the first axis A1a, both of which form the corner portion A1 of the travel route, are respectively defined as an operation axis. That is, the preceding operation axis is defined as the first axis and the following operation axis is defined as the second axis.

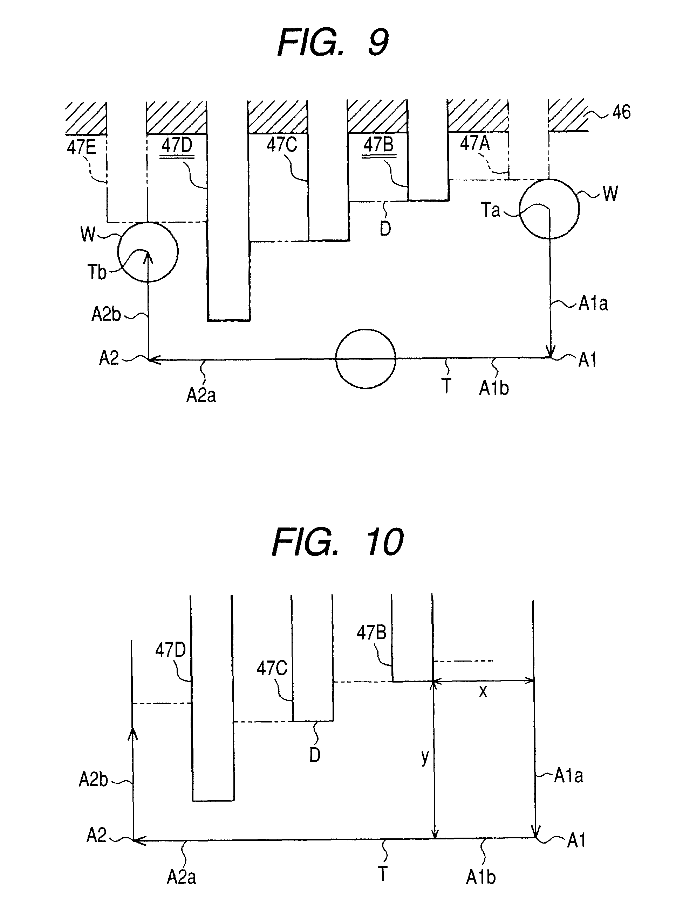

After that, in S5, as shown in Fig. 9, at the corner portion A1 of the travel route T, the closest tools to the travel routes of the first axis A1a and the second axis A1b are identified. That is, the tool 47B, which is the closest to the travel route of the first axis A1a of the corner portion A1, and the tool 47D, which is the closest to the travel route of the second axis A1b, are identified.

Further, in S6, a corner portion of the tool 47B closest to the first axis A1a is specified as an object to be processed in the program after S7.

Next, in S7, as shown in Fig. 10, the distance x between the travel route of the first axis A1a and the corner portion of the tool 47B and the distance y between the travel route of the second axis A1b and the corner portion of the tool 47B are calculated.

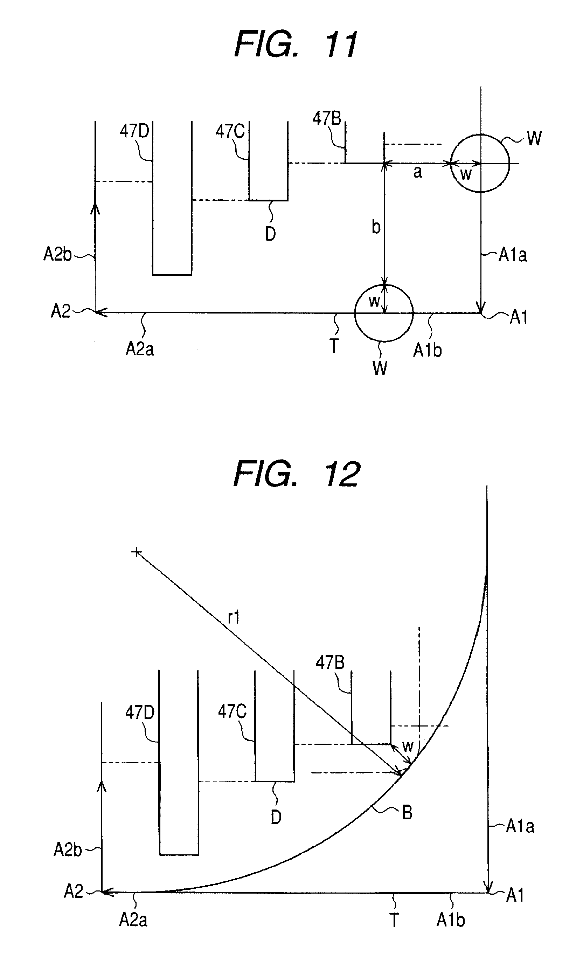

Further, in S8, as shown in Figs. 3A and 11, a calculation of subtracting the radius w of the workpiece W from the distances x, y calculated in S7 is performed. By this calculation, the shortest distances a, b from the corner portion of the tool 47B to the outer peripheral surface of the workpiece W on both axes A1a, A1b are calculated. That is, as shown in Figs. 3A and 3B, in this first embodiment, the axis of the workpiece W and the extending direction of the tool form a right angle and the tool 47 makes relative movement with regard to the workpiece w in such a manner that the tool 47 moves around the periphery of the workpiece W. Therefore, the radius w of the workpiece W is determined assuming the corner portion of the tool 47 as the center of a circle.

Next, in S9, as shown in Figs. 3A and 12, the travel boundary arc B is set for the corner portion of the tool 47B, where the workpiece W and the tool 47B is allowed to relatively move. That is, this travel boundary arc B is set in such a manner that the travel boundary arc B can be inscribed in the first axis A1a and the second axis A1b and circumscribed with an arc drawn by the radius w of the workpiece W assuming the corner portion of the tool 47B as the center of a circle. The radius r1 of this travel boundary arc B is calculated by the following Formula 1 according to the distances a, b calculated in S8 and the radius w of the workpiece W.

[Formula 1]

$$R1 = (w + a + b) + \sqrt{2ab}$$

Further, in S10, data showing the radius r1 of the travel boundary arc with respect to the tool 47B calculated in S9 is stored in a predetermined region of RAM 58.

Next, in S11, it is determined whether or not setting of the travel boundary arc B has been completed with respect to the tool 47D which is closest to the second axis A1b of the corner portion A1 of the travel route T.

In the case where setting of the travel boundary arc B has not been completed with respect to the tool 47D, the program proceeds to S12 and a corner portion of the next tool 47C is specified as an object of a processing of the program.

After that, the program returns to S7. In the same manner as that of the tool 47B, for the corner portion of the tool 47C, the distances x, y in S7 are calculated, the distances a, b in S8 are calculated, the radius r2 of the travel boundary arc B in S9 is calculated and the radius r2 of the travel boundary arc B in S10 is stored in RAM 58, wherein these actions are performed in this order.

Further, the program proceeds to S11 and in the same manner as that described above, the determination in S11 is performed and the next tool 47D in S12 is specified in order. For the corner portion of the tool 47D, the actions of S7 to S10 are repeatedly performed and the radius r3 of the travel boundary arc B is calculated and stored in RAM 58 at the same time.

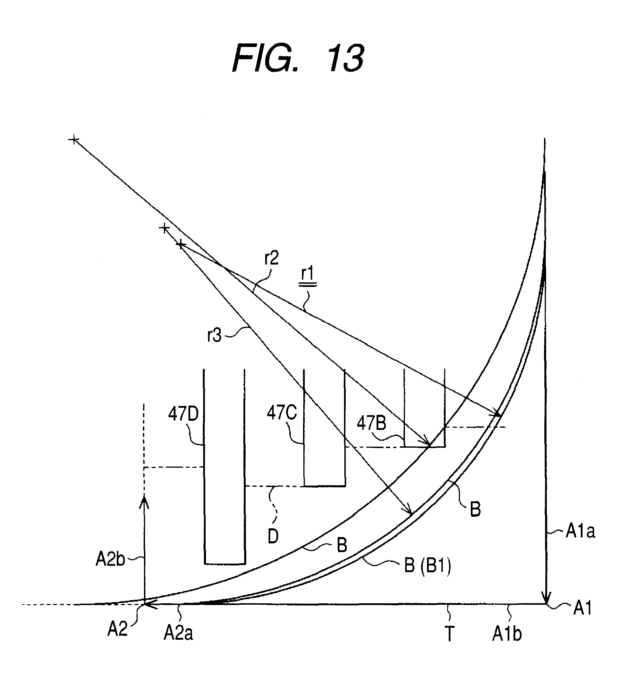

On the other hand, in S11, in the case where it is determined that setting of the travel boundary arc B has been completed with respect to the tool 47D which is closest to the second axis A1b of the corner portion A1 of the travel route T, the program proceeds to S13. In this S13, as shown in Fig. 13, sizes of the radiuses r1 to r3 of the travel boundary arcs B of the tools 47B to 47D stored in RAM 58 are compared with each other. As shown in Fig. 3A, the minimum radius r1 is set as the radius R1 of the travel boundary arc B1 for the corner portion A1 of the travel route T and stored in a predetermined region of RAM 58.

Successively, in S14, for all corner portions of the travel route T, it is determined whether or not setting of the travel boundary arc B1 has been completed.

In the case where setting of the travel boundary arc B1 has not been completed, the program proceeds to S15 and the next corner portion A2 of the travel route T is specified as an object of the operation. After that, the program returns to S4 and in the same manner as that of the corner portion A1 of the travel route T, the actions of S4 to S14 are performed for the corner portion A2. In this case, the second axis A1b for the corner portion A1 becomes the first axis A2a for the corner portion A2. Another travel route after the corner portion A2 is defined as the second axis A2b. As shown in Fig. 3B, the radius R1 of the travel boundary arc B1 for the corner portion A2 is set and stored in a predetermined region of RAM 58.

In the next S16, at the time of actually changing the tool from the tool 47A to the tool 47E, the travel control is performed based on an approximate arc in each corner portion A1, A2 of the travel route T.

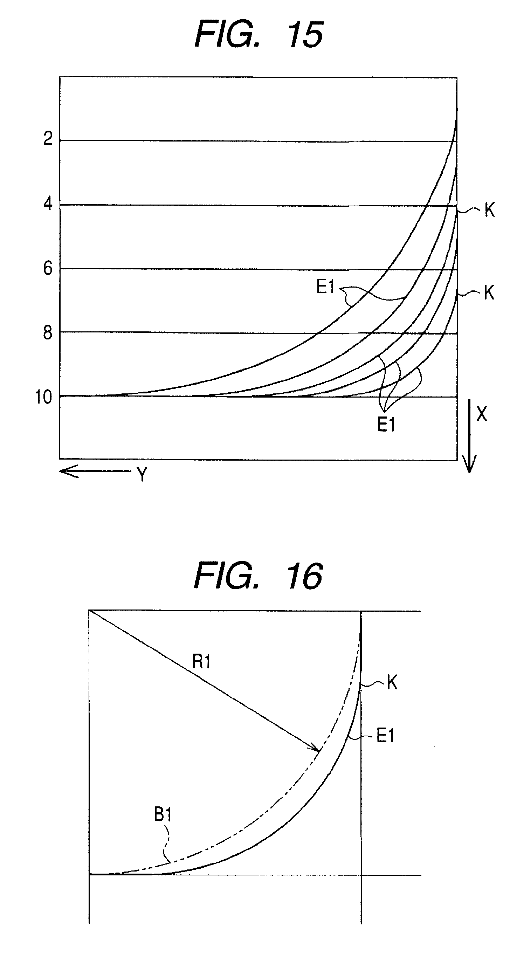

As shown in Figs. 15 and 16, the approximate arc is defined as a travel locus drawn by a moving member in the following manner. When the moving member is traveling by rapid traverse on the first axis in the X-axis direction, rapid traverse movement of the moving member is started in the Y-axis direction at a predetermined timing and then the movement in the X-axis direction is ended. The movement to draw the approximate arc locus is performed by rapid traverse that is not accompanied by the interpolation control. Therefore, a quick travel can be made. When the start timing in the Y-axis direction is appropriately set, a travel locus is available as an approximate arc of a certain radius of curvature according to the acceleration and the deceleration at the start and the end of the movement. However, as long as the moving member travels outside the travel boundary arc, movement in the X-axis and Y-axis directions maybe simultaneously started. In this case, a locus of the moving member becomes linear in the neighborhood of the start point of the travel. However, in the explanations made from now on, the approximate arc contains a case in which the locus of the moving member is linear.

In the case where the workpiece W makes relative movement with respect to the tool post 46 for supporting the tools 47A to 47E on the travel route T via the corner portions A1, A2 comprising the first axis A1a, A2a and the second axis A1b, A2b, as shown in Fig. 16, movement of the workpiece W is controlled in such a manner that the workpiece W can pass through the travel locus of the approximate arc E1 outside the travel boundary arc B1.

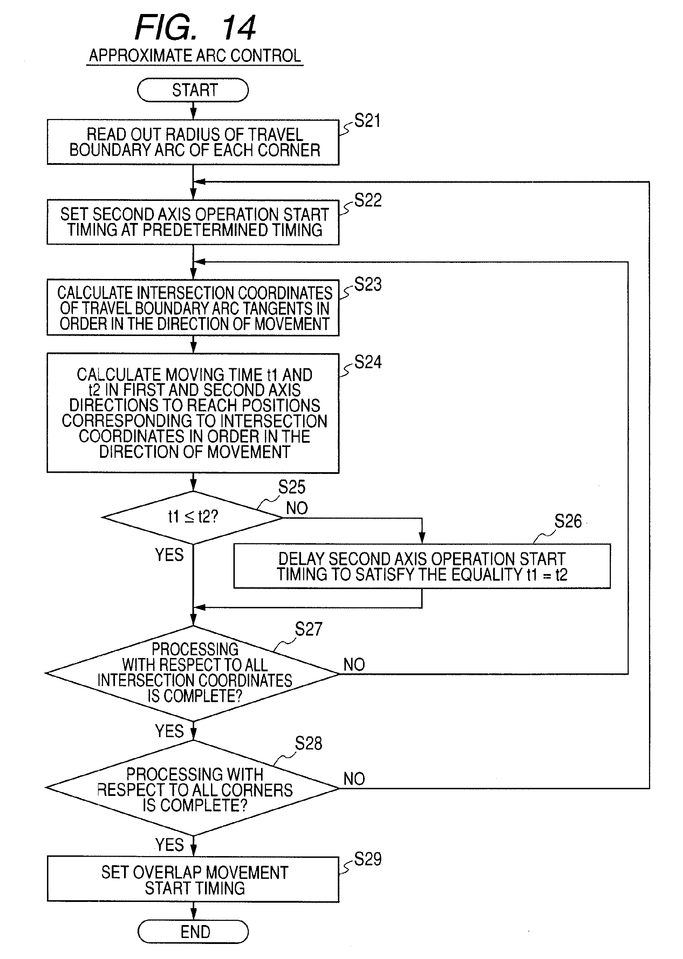

Next, referring to Figs. 14 to 18, the travel control based on the approximate arc E1 in the subroutine of S16 will be explained in detail as follows.

When the travel control based on the approximate arc is to be started under control of CPU 56, in S21 of Fig. 14, data of the radius R1 of the travel boundary arc B1 in each corner portion A1, A2 of the travel route T is read out from RAM 58.

Next, in S22, in each corner portion A1, A2, with respect to the first axis in the X-axis or Y-axis direction in which the workpiece W is first relatively moved with respect to the tool post 46 (preceding operation) and the second axis in the Y-axis or X-axis direction in which the workpiece W is secondly relatively moved with respect to the tool post 46 (following operation), the movement start timing on the second axis is set at a predetermined value. This movement start timing on the second axis is stored in ROM 57 in such a manner that the movement start timing on the second axis corresponds to the movement start timing on the first axis or the movement start timing on the second axis is slightly delayed with respect to the movement start timing on the first axis. Since the X-axis is the first axis and the Y-axis is the second axis in Figs. 15 and 16, the explanation is referred to the corner portion A1 in Fig. 5.

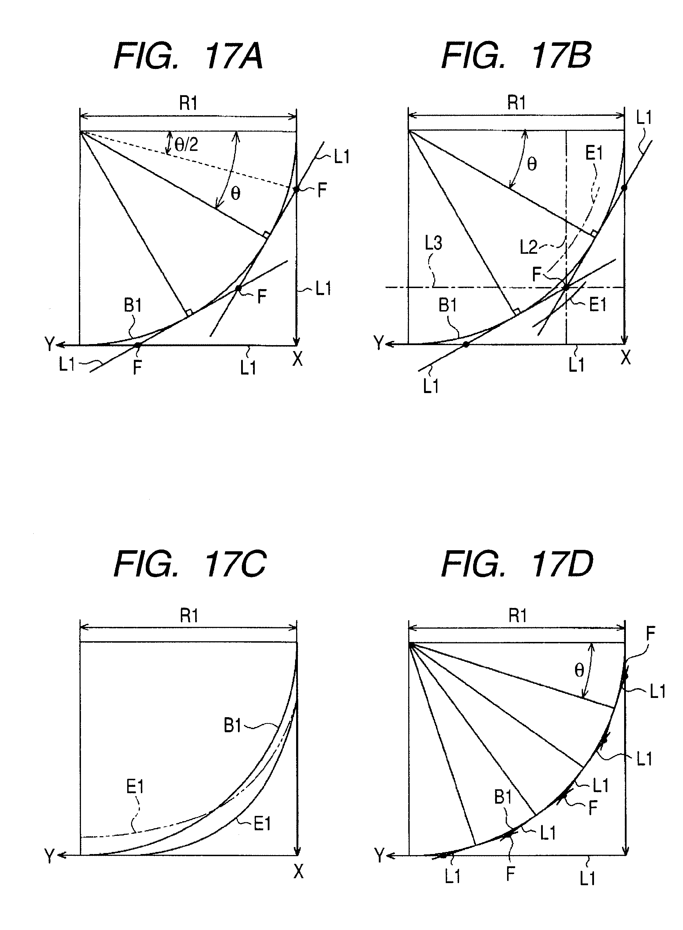

Next, in S23, as shown in Fig. 17A, a plurality of tangents L1 are calculated for every given regular interval angle θ with respect to the travel boundary arc B1. Further, intersection coordinates F functioning as intersections with these tangents L1 are calculated. As described above, since the tangents L1 are located at regular angle intervals, respective distances between the respective intersection coordinates F on the radial line of the travel boundary arc B1 and the travel boundary arc B1 can be made equal. In Fig. 17A, the number of the tangents L1 is four including the X-axis functioning as the first axis and the Y-axis functioning as the second axis. Accordingly, the associated intersection coordinates F are set at three positions spaced at regular intervals. In this case, the angle θ is previously set by manual input or the like. Therefore, the number of the tangents L1 and the number of the intersection coordinates F are previously set.

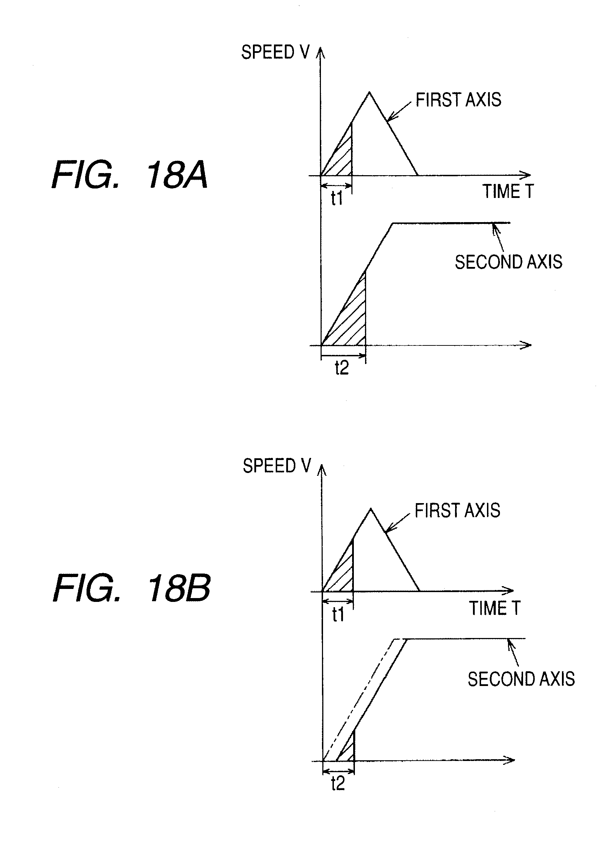

In S24, on the assumption that the workpiece W is relatively moved with respect to the tool post 46 on the approximate arc locus E1 (shown in Fig. 15) to be drawn depending on the overlap movement start timing (the second axis operation start timing) , as shown in Figs. 17B and 18A, a first time t1 is calculated where the workpiece W reaches the Y-axis direction line L3 functioning as the second axis direction line passing through the intersection coordinates F and a second time t2 is calculated where the workpiece W reaches the X-axis direction line L2 functioning as the first axis direction line passing through the intersection coordinates F.

Next, in S25, the time t1 and the time t2 are compared with each other. When t1 = t2, the approximate arc locus E1 passes through the intersection coordinates F. When t1 < t2, as shown by the solid line in Fig. 17B, the approximate arc locus E1 is located outside the travel boundary arc B1 and also spaced from the travel boundary arc B1 via the intersection coordinates F. When t1 > t2, as shown by the two-dotted chain line in Fig. 17B, the approximate arc locus E1 is located inside the travel boundary arc B1 beyond the intersection coordinates F. Accordingly, when the inequality t1 ≤ t2 is satisfied, the approximate arc locus E1 does not enter inside the travel boundary arc B1. However, in the case of t1 > t2, as shown by the two-dotted chain line in Fig. 17C, there is a possibility that the workpiece W is relatively moved inside the travel boundary arc B1 and the workpiece W might interfere with the tools 47A to 47E.

That is, since the intersection coordinates F and the travel boundary arc B1 are located close to each other, for t1 > t2, there is a possibility that the approximate arc locus E1 enters inside the travel boundary arc B1 in the neighborhood of the intersection coordinates F (the extending position in the direction of the first axis of the intersection coordinates F). Further, even in the case where the approximate arc locus E1 is located outside the travel boundary arc B1 in the neighborhood of the intersection coordinates F, there is a possibility that the locus enters inside the travel boundary arc B1 between the present intersection coordinates F and the next intersection coordinates F. The reason is described as follows. In the case where the travel locus between the intersections is substantially linear, when the locus enters inside at one intersection coordinates F, there is a high possibility that the locus between the intersection coordinates F before and behind such intersection enters inside the travel boundary arc B1.

As shown in the first embodiment, the travel locus usually provides a linear-shape or an outward expanded arc-shaped locus, but does not provide an inward expanded locus under the condition that movement in the direction of the first axis starts earlier than or simultaneously with movement in the direction of the second axis, thereby overlapping the two axes operations, and then movement in the direction of the first axis stops earlier than or simultaneously with movement in the direction of the second axis. Therefore, when the travel locus exists outside all intersection coordinates F, the travel locus does not enter inside the travel boundary arc B1 in all travel ranges.

Accordingly, in the case of t1 > t2, in S26, as shown in Fig. 18B, in order to satisfy the equality t1=t2, the operation start timing in the second axis direction is delayed. As described above, data of the overlap movement start timing (the second axis operation start timing) K expressing t1 = t2 or t1 < t2 is stored in a temporary storing region of RAM 58.

On the other hand, in S25, in the case where t1 = t2 or t1 < t2 is determined to be satisfied, the program proceeds to S27. In this S27, it is determined whether or not the processing of S23 to S26 is completed for all the intersection coordinates F. When the processing of S23 to S26 is completed for all the intersection coordinates F, the program proceeds to S28. When the processing of S23 to S26 is not completed for all the intersection coordinates F, the program returns to S23.

Successively, in S28, it is determined whether or not processing of S22 to S27 is completed for all corner portions A1, A2 in the travel route T shown in Fig. 5. When processing of S22 to S27 is completed, that is, when setting of the overlap movement start timing (the second axis operation start timing) K is completed for all corner portions, the program proceeds to S29. When setting of the overlap movement start timing (the second axis operation start timing) K is not completed, the program returns to S22 and transfers to processing of the overlap movement start timing (the second axis operation start timing) K for the next corner portions.

As described above, the relative travel locus of the tool post 46 and the workpiece W is calculated, which is a route in which the workpiece W is relatively moved outside the travel boundary arc B1. In other words, the overlap movement start timing (the second axis operation start timing) K by rapid traverse expressing the approximate arc locus E1 not interfering with the tools 47A to 47E is calculated. In the next S29, data of the overlap movement start timing (the second axis operation start timing) K is transferred from the temporary storing region of RAM 58 to the working region to be stored.

After that, at the time of changing the tools, the workpiece W is relatively moved by rapid traverse with respect to the tool post 48 while drawing the approximate arc locus E1 outside the travel boundary arc B1. Accordingly, it is possible to prevent interference of the tools 47A to 47E with an outer peripheral surface of the workpiece W. Further, it is possible to change the tools 47A to 47E in a short period of time. Accordingly, the operation efficiency of the machine tool can be enhanced.

In this connection, as shown in Fig. 17D, the larger the number of the tangents L1 to be set at regular angle intervals, the closer to the travel boundary arc B1 the intersection coordinates F come. Therefore, the approximate arc locus E1 can be made to come much closer to the travel boundary arc B1. In Figs. 17A and 17B, in order to simplify the explanations, an example is shown in which the regular angle interval θ is 30 degrees. However, the regular angle interval θ is actually set in the range of about 1 to 18 degrees. Therefore, the intersection coordinates F exist at a position considerably close to the travel boundary arc B1. Accordingly, in this case, it is possible to shorten the travel route on the approximate arc locus E1. Therefore, the tool change time can be further shortened.

For example, in the case where a distance between the corner portions A1 and A2 is short, there is possibility that the approximate arc for the corner portion A1 and the approximate arc for the corner portion A2 may intersect one another. In order to cope with these circumstances, in the program of Fig. 14, a step maybe added to determine whether or not the approximate arcs intersect one another and in the case where the approximate arcs intersect one another, the travel boundary arc B1 of a smaller diameter is set to prevent intersection. In the case where it is considered that movement on the second axis is completed before the first axis, in the program shown in Fig. 14, the movement completion timing of the second axis may be matched to that of the first axis. Alternatively, a step for adjusting the movement start timing for the second axis may be added so that the first axis can be completed earlier.

(Second Embodiment)

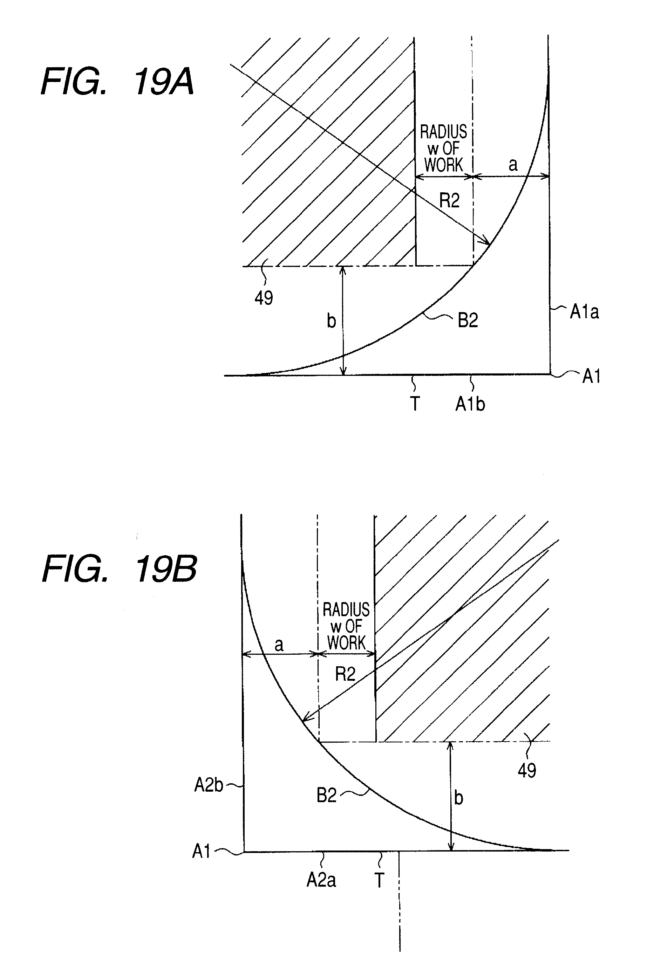

Next, referring to Figs. 19 to 29, different points of the second embodiment of the invention from those of the first embodiment will be mainly explained below.

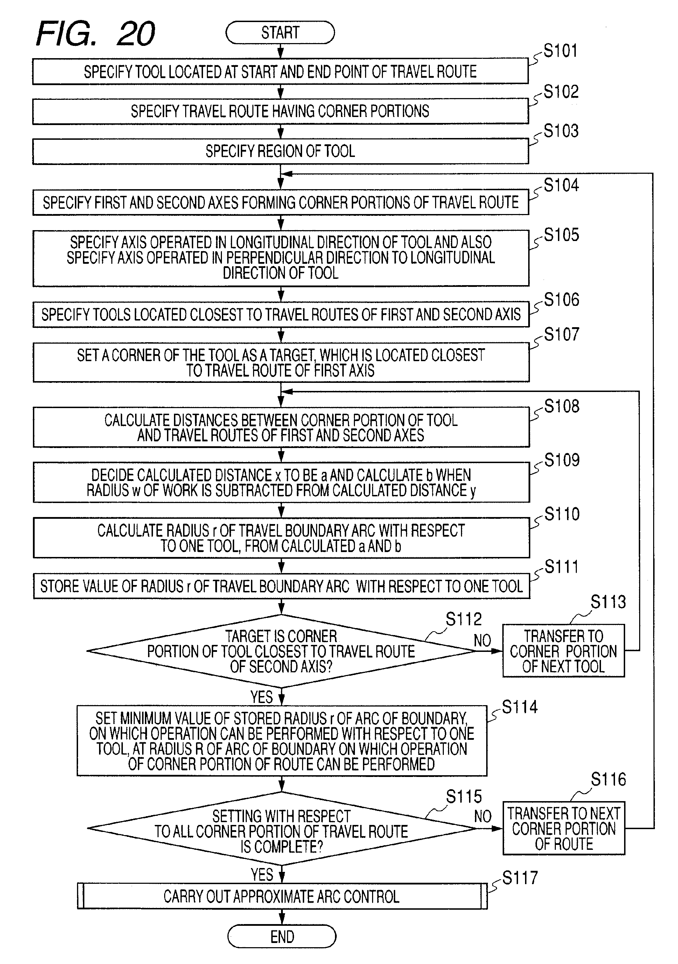

This second embodiment is realized in the case where an end surface of the workpiece W is machined by the tool 49 such as a plurality of drills arranged on the tool post 46 in parallel with each other in the machine tool shown in Fig. 1. Operation of changing tools 49 in this second embodiment proceeds according to the routine shown in Fig. 20 under control of CPU 56.

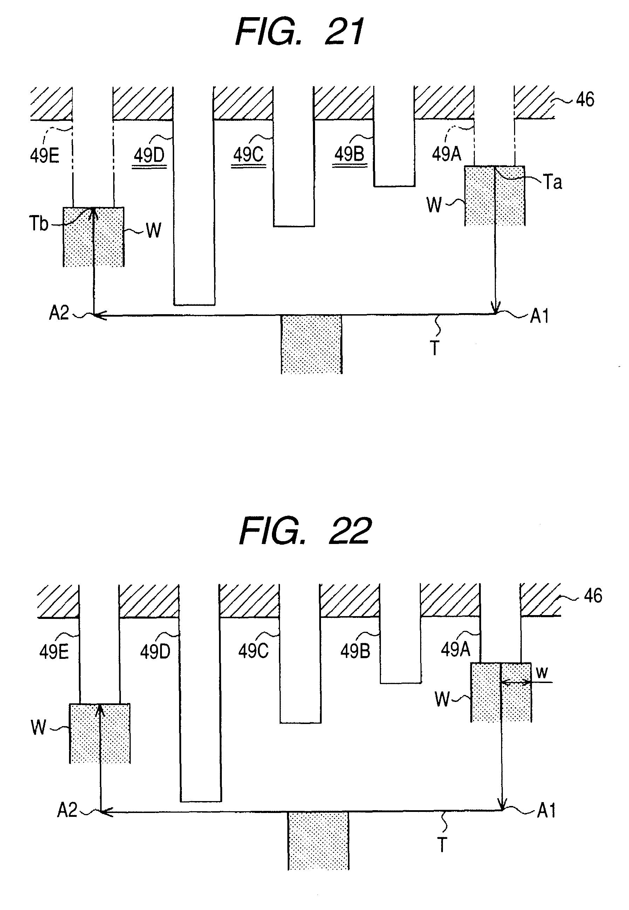

In this second embodiment, in the same manner as that of the first embodiment, for the convenience of explanations, the headstock 42 holding the workpiece W is moved in two axial directions (the directions of Y-axis and Z-axis in the second embodiment) with respect to the tool post 46 to change the tools. In the schematic illustrations of Figs. 21 to 29 related to the steps shown in Fig. 20, in order to simplify a nose (leading end) of the tool 49, the nose is shown as a rectangular shape in the same manner as that of the first embodiment.

When the tool change instruction is given from the input portion 59 shown in Fig. 2, in S101 of Fig. 20, in the same manner as that of S1 of the first embodiment, as shown in Fig. 21, the tools 49B, 49C, 49D are identified, as they are located between the start point and the end point of the travel route T having corner portions where the axial center of the workpiece passes.

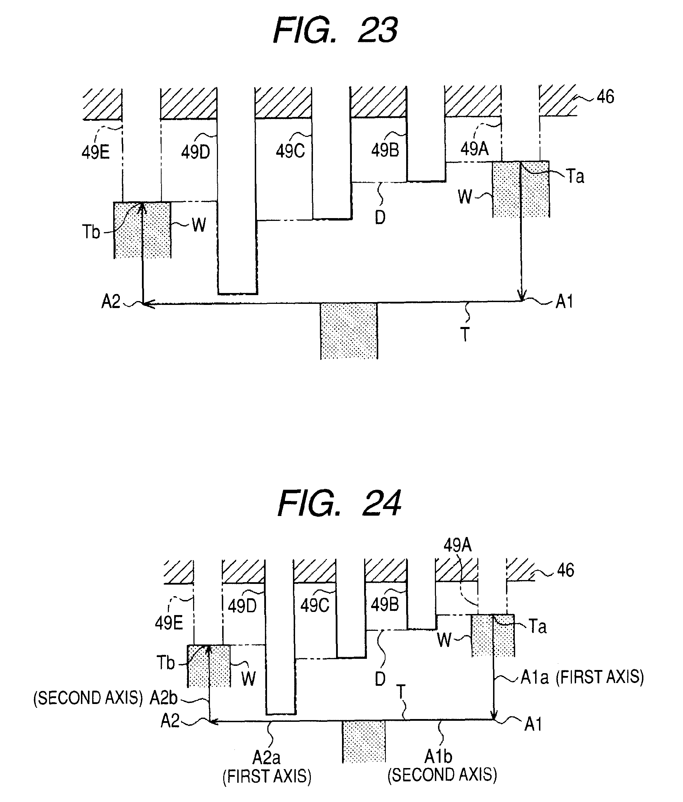

After that, in S102 to S104, the same actions as those of S2 to S4 of the first embodiment are performed in order. That is, in S102, as shown in Fig. 22, the travel route T having the corner portions A1, A2 is decided. In S103, as shown by the two-dotted chain line in Fig. 23, the region D of the tools 49A to 49E is defined. In S104, as shown in Fig. 24, the first axis A1a, A2a and the second axis A1b, A2b are defined so that they intersect one another to form the corner portions A1, A2 of the travel route T.

Successively, in S105, concerning the corner portions A1, A2 of the travel route T, the axis (Z-axis) operated in the longitudinal direction (the advance and retreat direction) of the tools 49A to 49E and the axis (Y-axis) operated in the direction (the tool arrangement direction) perpendicular to the longitudinal direction of the tools 49A to 49E are specified. That is, for the corner portion A1, the axis operated in the longitudinal direction is specified as the first axis A1a and the axis operated in the direction perpendicular to the longitudinal direction is specified as the second axis A1b. For the corner portion A2, the axis operated in the longitudinal direction is specified as the second axis A2b and the axis operated in the direction perpendicular to the longitudinal direction is specified as the first axis A2a.

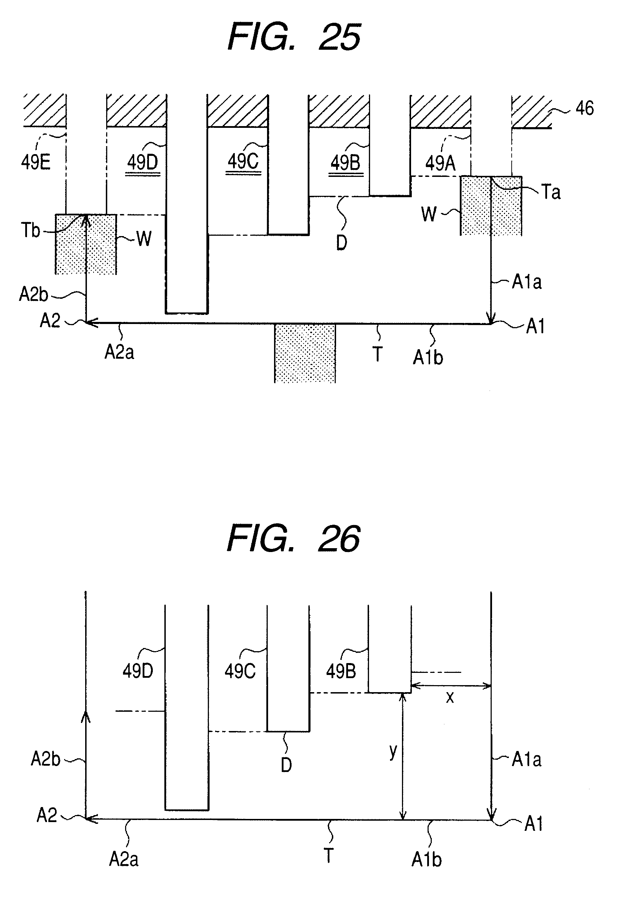

After that, in S106, in the same manner as that of S5 of the first embodiment, for the corner portions A1, A2 of the travel route T, the tool located at the closest position to the travel route of the first axis A1a, A2a and the second axis A1b, A2b is specified. That is, as shown in Fig. 25, for the corner portion A1, the tool 49B located at the closest position to the travel route of the first axis A1a and the tool 49D located at the closest position to the travel route of the second axis A1b are specified. For the corner portion A2, the tool 49D located at the closest position to the travel route of the first axis A2a and the tool 49D located at the closest position to the travel route of the second axis A2b are specified.

Further, in S107, in the same manner as that of S6 of the first embodiment, the corner portion of the tool 49B located at the closest position to the first axis A1a of the corner portion A1 is specified as an object of the operation performed after S108.

Next, in S108, in the same manner as that of S7 of the first embodiment, as shown in Fig. 26, the distance x between the travel route of the first axis A1a and the corner portion of the tool 49B and the distance y between the travel route of the second axis A1b and the corner portion of the tool 49B are calculated.

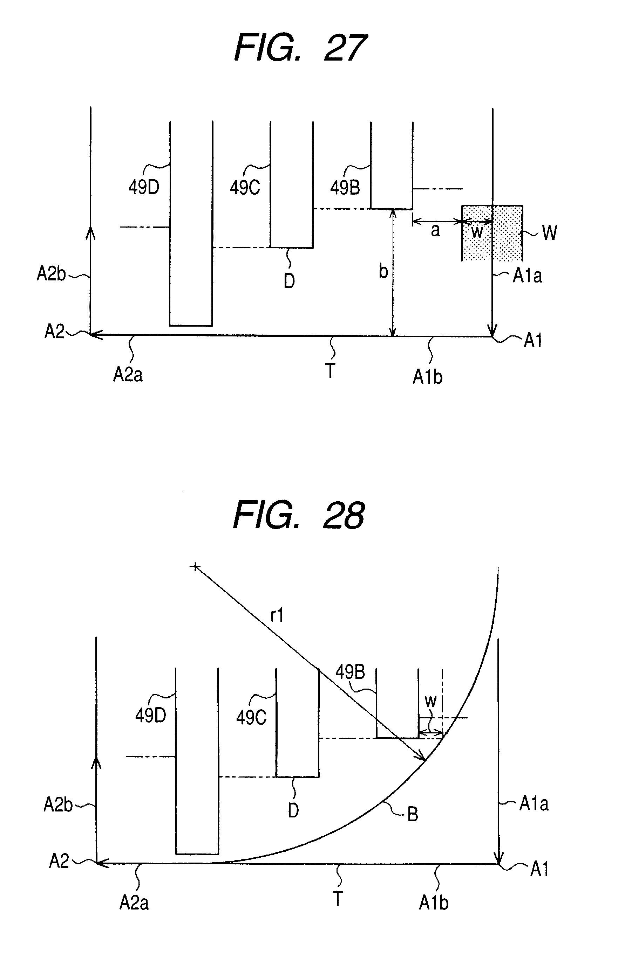

Further, in S109, as shown in Fig. 27, when the radius w of the workpiece W is subtracted from the distance x calculated in S108, the distance a from the corner portion of the tool 49B to an outer peripheral surface of the workpiece W on the first axis A1a is calculated. At the same time, the distance y calculated in S108 is calculated as the distance b from the corner portion of the tool 49B to the second axis A1b. That is, in this second embodiment, as shown in Figs. 19A and 19B, the axes of the workpiece W and the tools 49 are parallel with each other and the workpiece W and the tools 49 are relatively moved in such a manner that a nose (forward end portion) of the tool 49 can be transferred from the side of the workpiece W to the end surface. Accordingly, a distance corresponding to the radius w of the workpiece W is set on the side of the tool 49.

Successively, in S110, as shown in Fig. 28, the travel boundary arc B for the corner portion of the tool 49B is set, on which the workpiece Wand the tool 49B can be made to relatively travel. That is, this travel boundary arc B is set so that the travel boundary arc B can be inscribed in the first axis A1a and the second axis A1b and pass through a position distant from the corner portion of the tool 49B by an interval corresponding to the radius w of the workpiece W in the tool arrangement direction. The radius r1 of this travel boundary arc is calculated by the following Formula 2 according to the distances a, b calculated in S109. In S111, the radius r1 of the travel boundary arc for the tool 49B calculated in S110 is stored in a predetermined region of RAM 58.

[Formula 2]

$$R2 = (a+b) + \sqrt{2ab}$$

After that, in S112 to S117, the same actions as those of S11 to S16 of the first embodiment are carried out. That is, in S112, it is determined whether or not setting of the travel boundary arc has been completed to the closest tool 49D to the second axis A1b of the corner portion A1 of the travel route T. In the case where setting of the travel boundary arc has not been completed yet, the program proceeds to S113 and a corner portion of the next tool 49C is specified as an object of operation. After that, the program returns to S108. In the same manner as that of the case of the tool 49B, for the corner portion of the tool 49C, the distances x, y are calculated in S108, the distances a, b are calculated in S109, the radius r2 of the travel boundary arc is calculated in S110, and the radius r2 of the travel boundary arc is stored in S111, wherein these actions are performed in order.

Further, the program proceeds to S112 and in the same manner as that described before, the determination is made in S112 and the next tool 49D is specified in S113 in order. For the corner portion of this tool 49D, the actions described in S108 to S111 are repeatedly performed and the radius r3 of the travel boundary arc is calculated and stored in RAM 58 at the same time.

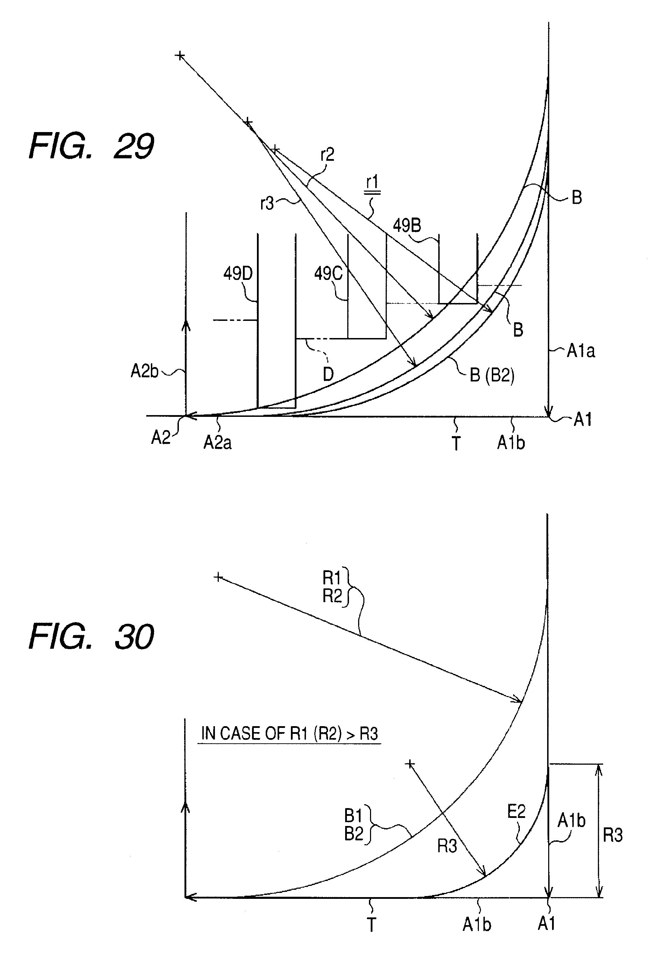

In S112, when it is determined that setting of the travel boundary arc has been completed to the closest tool 49D to the second axis A1b of the corner portion A1 of the travel route T, the program proceeds to S114. In this S114, as shown in Fig. 29, the radiuses r1 to r3 of the travel boundary arcs of the tools 49B to 49D stored in RAM 58 are compared with each other. As shown in Fig. 19, the radius r1 of the minimum value is set as the radius R2 of the travel boundary arc B2 of the corner portion A1 of the travel route T and stored in a predetermined region of RAM 58.

Successively, in S115, for all the corner portions of the travel route T, it is determined whether or not setting of the travel boundary arc B2 has been completed. In the case where setting of the travel boundary arc B2 has not been completed, the program proceeds to S116 and the next corner portion A2 of the travel route T is specified as an object of operation. After that, the program returns to S104 and in the same manner as that of the case of the corner portion A1 of the travel route T, for this corner portion A2, the actions described in S104 to S114 are repeatedly performed and the radius R2 of the travel boundary arc B2 of the corner portion A2 is set and stored in a predetermined region of RAM 58.

In the next S117, when the tool is actually changed over from the tool 49A to the tool 49E, the travel control of controlling an approximate arc in each corner portion A1, A2 of the travel route T is carried out. That is, the travel control is performed as follows. When the workpiece W is relatively moved from the first axis A1a, A2a to the second axis A1b, A2b via each corner portion A1, A2 of the travel route T with respect to the tool post 46 for supporting the tools 49A to 49E, in the same manner as that of the first embodiment, an approximate arc is set outside the travel boundary arc B2 and the travel control is performed in such a manner that the tools can pass on the travel locus of this approximate arc.

Accordingly, in this second embodiment, in the substantially same manner as that of the first embodiment, the tools 49A to 49E for machining an end surface of the workpiece W can be changed over in a short period of time without making interference with an outer peripheral surface of the workpiece W. Therefore, the operation efficiency of the machine tool can be enhanced.

(Modification)

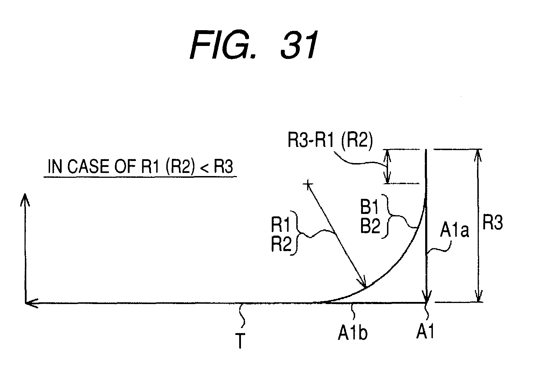

This embodiment can be realized even modified as follows.
Instead of the approximate arc control in S16 of Fig. 4 of the first embodiment or instead of the approximate arc control in S117 of Fig. 20 of the second embodiment, the interpolation control maybe adopted so that the relative travel locus can draw an arc as shown in Figs. 30 and 31.

In this case, the route E2 of the arc interpolation of the radius R3 is previously set and compared with the radiuses R1, R2 of the travel boundary arcs B1, B2 of the corner portions A1, A2. In the case where the radiuses R1, R2 of the travel boundary arcs B1, B2 are larger than the radius R3 of the arc interpolation route E2, as shown in Fig. 30, the arc interpolation is performed from the travel route start point with R3 used as a radius of curvature of the arc. On the other hand, in the case where the radii R1, R2 of the travel boundary arcs B1, B2 are smaller than the radius R3 of the arc interpolation route E2, as shown in Fig. 31, a linear movement is made from the movement route start point by the distance R3-(minus) R1 or R3-(minus) R2. After that, the arc interpolation is carried out with R1 or R2 used as a radius of curvature.

In each embodiment described above, instead of the approximate arc control or the arc interpolation control, the movement control may be performed so that the workpiece W is adapted to relatively move on a straight line inclined with respect to the first and the second axis outside the travel boundary arcs B1, B2.

In the first and the second embodiment described above, setting of the approximate arc in the relative movement of the workpiece W with respect to the tool post, that is, setting of the overlap movement start timing (second axis operation start timing) was carried out by the calculation shown in Fig. 14. Instead of that, a table containing data on the overlap movement start timing (second axis operation start timing) k based on the relationship between the travel distance in the first axis direction of the relative movement of the workpiece W and the diameter of the travel boundary arc. The control unit controls an operation of the drive means according to the table data. That is, the table contains data on the overlap movement start timing (second axis operation start timing) to form the relative travel locus outside the travel boundary arc. Due to the above configuration, it is possible to set the overlap movement start timing (second axis operation start timing) only by referring to the table. Therefore, the setting action can be quickly carried out.

A non-columnar workpiece may be also used as the workpiece W including a workpiece whose shape at cross section is hexagon, octagon and other polygon shapes. Such polygonal workpiece W is handled as a columnar workpiece, having a circumference passing through the tops of the corners on the outer peripheral surface of the workpiece. Accordingly, for example, a radius of the octagonal-prism-shaped workpiece is a distance from the axial center to the top of one of the corners.

In each embodiment described above, the specific example is shown in which the first and the second axis intersect each other at right angle. However, even in the case where the first and the second axis intersect each other by an angle except for 90 degrees, the invention is realized.

**Claims**

1. A movement control apparatus for a machine tool, comprising:

   a tool post with a plurality of tools arranged parallel for machining a workpiece;
   a drive unit adapted to move at least one of the tool post and the workpiece in a direction of a first axis and in a direction of a second axis that intersects the first axis to make a relative movement happen between the workpiece and the tool post, and adapted to overlap the movement in the first axis direction and the movement in the second axis direction to make the relative movement happen in such a manner that the workpiece moves around the periphery of the tool post, thereby changing the tools;
   a travel boundary arc setting unit adapted to set a travel boundary arc in such a manner that the travel boundary arc is inscribed in the first and the second axes and an axial center of the workpiece or a forward end center of the workpiece passes through a position distant from a corner portion of a tool by a radius of the workpiece; and
   a control unit adapted to control the drive unit to make the relative movement happen in such a manner that the workpiece moves around the periphery of the tool post from the first axis to the second axis along a travel locus outside the travel boundary arc.

2. The movement control apparatus according to claim 1, wherein the travel boundary arc setting unit sets a plurality of travel boundary arcs corresponding respectively to corner portions of the plurality of tools, selects the travel boundary arc of the smallest radius, and sets the selected travel boundary arc.

3. The movement control apparatus according to claim 1 or 2, wherein the travel boundary arc setting unit sets the travel boundary arc in such a manner that the travel boundary arc is inscribed in the first and the second axes and circumscribed with an arc drawn by the radius of the workpiece assuming the corner portion of the tool closest to the first and second axes as the center of a circle.

4. The movement control apparatus according to claim 3, further comprising: a distance calculation unit adapted to calculate distances between the tool and an outer peripheral surface of the workpiece on the first and the second axes when the workpiece and the tool post are relatively moved in the first and second axis directions, wherein:

the travel boundary arc setting unit adapted to calculate the radius R1 of the travel boundary arc by formula 1,

[Formula 1]

$$R1 = (w + a + b) + \sqrt{2ab}$$

where w is the radius of the workpiece, a is the distance between the tool and the workpiece on the first axis, b is the distance between the tool and the workpiece on the second axis, and the control unit adapted to control the drive unit in such a manner that a travel locus of the workpiece from the first axis to the second axis while changing a tool is located outside an arc of the radius R1.

5. The movement control apparatus according to claim 1 or 2, wherein the travel boundary arc setting unit is adapted to set the travel boundary arc in such a manner that the travel boundary arc is inscribed in the first and the second axes and that the travel boundary arc passes through a position distant from a corner portion of the tool closest to the first and the second axes by a distance corresponding to the radius of the workpiece in a tool arrangement direction.

6. The movement control apparatus according to claim 5, further comprising: a distance calculation unit adapted to calculate a distance between the tool and an outer peripheral surface of the workpiece on one of the first and the second axes parallel to the tool arrangement direction and to calculate a distance between the tool and the other of the first and the second axes that is parallel to a tool advance and retreat direction when the workpiece and the tool post are relatively moved in the first and second axis directions, wherein:

the travel boundary arc setting unit adapted to calculate the radius R2 of the travel boundary arc by formula 2,

[Formula 2]

$$R2 = (a + b) + \sqrt{2ab}$$

where w is the radius of the workpiece, a is the distance between the tool and the workpiece on one of the first and the second axes, and b is the distance between the tool and the other axis; and

the control unit is adapted to control the drive unit in such a manner that a travel locus of the workpiece from the first axis to the second axis while changing a tool is located outside an arc of the radius R2.

7. The movement control apparatus according to any one of claims 1 to 6, wherein the drive unit is adapted to make the relative movement between the workpiece and the tool post by rapid traverse when the first axis operation and the second axis operation overlap, and
the control unit is adapted to control the drive unit to start the overlap movement (the second axis operation) at a timing previously set.

8. The movement control apparatus according to claim 7, further comprising:

   a first calculation unit adapted to calculate a plurality of tangents with respect to the travel boundary arc and intersections of the plurality of tangents; and
   a second calculation unit adapted to calculate a first time and a second time, wherein the first time and a second time are counted from the start of the relative movement until when a travel locus reaches a first axis direction line parallel to the first axis and a second axis direction line parallel to the second axis respectively passing through the intersections;
   wherein the control unit is adapted to delay a previously set timing to start the overlap movement (the second axis operation) in such a manner that the first time and the second time are equal to each other when the second time is shorter than the first time.

FIG. 1

EP 2 026 151 A1

## FIG. 2

ROM — 57

RAM — 58

DISPLAY PORTION — 60

INPUT PORTION — 59

CPU — 56

MAIN SPINDLE ROTATION CONTROL CIRCUIT — 61

MAIN SPINDLE TRAVERSE CONTROL CIRCUIT — 62

TOOL TRAVERSE CONTROL CIRCUIT — 63

SUB SPINDLE ROTATION CONTROL CIRCUIT — 64

SUB SPINDLE TRAVERSE CONTROL CIRCUIT — 65

MAIN SPINDLE ROTATION DRIVE UNIT — 66

MAIN SPINDLE TRAVERSE DRIVE UNIT — 67

TOOL TRAVERSE DRIVE UNIT — 68

SUB SPINDLE ROTATION DRIVE UNIT — 69

SUB SPINDLE TRAVERSE DRIVE UNIT — 70

MAIN SPINDLE — 43

HEADSTOCK — 42

TOOL POST — 46

SUB SPINDLE — 45

BACK ATTACHMENT — 44

55

EP 2 026 151 A1

15

*FIG. 3A*

*FIG. 3B*

# FIG. 4

START

**S1** — IDENTIFY OBJECT LOCATED BETWEEN START AND END POINT OF TRAVEL ROUTE

**S2** — DEFINE TRAVEL ROUTE HAVING CORNER PORTIONS

**S3** — SPECIFY REGION OF TOOL

**S4** — SPECIFY FIRST AND SECOND AXES FORMING CORNER PORTIONS OF TRAVEL ROUTE

**S5** — IDENTIFY TOOLS LOCATED CLOSEST TO TRAVEL ROUTES OF FIRST AND SECOND AXES

**S6** — SET A CORNER OF THE CLOSEST TOOL AS A TARGET

**S7** — CALCULATE DISTANCES x AND y BETWEEN CORNER OF TOOL AND TRAVEL ROUTES OF FIRST AND SECOND AXES

**S8** — CALCULATE a AND b BY SUBTRACTING RADIUS w OF WORKPIECE FROM CALCULATED DISTANCES x AND y

**S9** — CALCULATE RADIUS r OF TRAVEL BOUNDARY ARC WITH RESPECT TO ONE TOOL, FROM CALCULATED RADIUSES OF a AND b AND RADIUS W OF WORKPIECE

**S10** — STORE VALUE OF RADIUS r OF TRAVEL BOUNDARY ARC WITH RESPECT TO ONE TOOL

**S11** — TARGET IS CORNER OF THE TOOL CLOSEST TO SECOND AXIS TRAVEL ROUTE?

NO → **S12** TRANSFER TO CORNER PORTION OF NEXT TOOL

YES ↓

**S13** — SET MINIMUM VALUE OF STORED RADIUS r OF TRAVEL BOUNDARY ARC WITH RESPECT TO ONE TOOL, AT RADIUS R OF TRAVEL BOUNDARY ARC B1 FOR A CORNER PORTION OF A TRAVEL ROUTE

**S14** — SETTING IS COMPLETE WITH RESPECT TO ALL CORNERS OF TRAVEL ROUTE?

NO → **S15** TRANSFER TO NEXT CORNER PORTION OF ROUTE

YES ↓

**S16** — CARRY OUT APPROXIMATE ARC CONTROL

END

# FIG. 5

# FIG. 6

## FIG. 7

## FIG. 8

# FIG. 9

# FIG. 10

# FIG. 11

# FIG. 12

# FIG. 13

# FIG. 14
APPROXIMATE ARC CONTROL

( START )

S21 READ OUT RADIUS OF TRAVEL BOUNDARY ARC OF EACH CORNER

S22 SET SECOND AXIS OPERATION START TIMING AT PREDETERMINED TIMING

S23 CALCULATE INTERSECTION COORDINATES OF TRAVEL BOUNDARY ARC TANGENTS IN ORDER IN THE DIRECTION OF MOVEMENT

S24 CALCULATE MOVING TIME t1 AND t2 IN FIRST AND SECOND AXIS DIRECTIONS TO REACH POSITIONS CORRESPONDING TO INTERSECTION COORDINATES IN ORDER IN THE DIRECTION OF MOVEMENT

S25 $t1 \le t2$?
NO → S26 DELAY SECOND AXIS OPERATION START TIMING TO SATISFY THE EQUALITY $t1 = t2$
YES

S27 PROCESSING WITH RESPECT TO ALL INTERSECTION COORDINATES IS COMPLETE?
NO →
YES ↓

S28 PROCESSING WITH RESPECT TO ALL CORNERS IS COMPLETE?
NO →
YES ↓

S29 SET OVERLAP MOVEMENT START TIMING

( END )

## FIG. 15

## FIG. 16

# FIG. 17A

# FIG. 17B

# FIG. 17C

# FIG. 17D

*FIG. 18A*

*FIG. 18B*

**FIG. 19A**

**FIG. 19B**

## FIG. 20

START

SPECIFY TOOL LOCATED AT START AND END POINT OF TRAVEL ROUTE ⌐S101

SPECIFY TRAVEL ROUTE HAVING CORNER PORTIONS ⌐S102

SPECIFY REGION OF TOOL ⌐S103

SPECIFY FIRST AND SECOND AXES FORMING CORNER PORTIONS OF TRAVEL ROUTE ⌐S104

SPECIFY AXIS OPERATED IN LONGITUDINAL DIRECTION OF TOOL AND ALSO SPECIFY AXIS OPERATED IN PERPENDICULAR DIRECTION TO LONGITUDINAL DIRECTION OF TOOL ⌐S105

SPECIFY TOOLS LOCATED CLOSEST TO TRAVEL ROUTES OF FIRST AND SECOND AXIS ⌐S106

SET A CORNER OF THE TOOL AS A TARGET, WHICH IS LOCATED CLOSEST TO TRAVEL ROUTE OF FIRST AXIS ⌐S107

CALCULATE DISTANCES BETWEEN CORNER PORTION OF TOOL AND TRAVEL ROUTES OF FIRST AND SECOND AXES ⌐S108

DECIDE CALCULATED DISTANCE x TO BE a AND CALCULATE b WHEN RADIUS w OF WORK IS SUBTRACTED FROM CALCULATED DISTANCE y ⌐S109

CALCULATE RADIUS r OF TRAVEL BOUNDARY ARC WITH RESPECT TO ONE TOOL, FROM CALCULATED a AND b ⌐S110

STORE VALUE OF RADIUS r OF TRAVEL BOUNDARY ARC WITH RESPECT TO ONE TOOL ⌐S111

TARGET IS CORNER PORTION OF TOOL CLOSEST TO TRAVEL ROUTE OF SECOND AXIS? — S112 — NO → TRANSFER TO CORNER PORTION OF NEXT TOOL — S113

YES ↓

SET MINIMUM VALUE OF STORED RADIUS r OF ARC OF BOUNDARY, ON WHICH OPERATION CAN BE PERFORMED WITH RESPECT TO ONE TOOL, AT RADIUS R OF ARC OF BOUNDARY ON WHICH OPERATION OF CORNER PORTION OF ROUTE CAN BE PERFORMED ⌐S114

SETTING WITH RESPECT TO ALL CORNER PORTION OF TRAVEL ROUTE IS COMPLETE? — S115 — NO → TRANSFER TO NEXT CORNER PORTION OF ROUTE — S116

YES ↓

CARRY OUT APPROXIMATE ARC CONTROL ⌐S117

END

## FIG. 21

## FIG. 22

# FIG. 23

# FIG. 24

# FIG. 25

# FIG. 26

# FIG. 27

# FIG. 28

*FIG. 29*

*FIG. 30*

IN CASE OF R1 (R2) > R3

# FIG. 31

IN CASE OF R1 (R2) < R3

R3-R1 (R2)

R1
R2

B1
B2

A1a

R3

T

A1b

A1

FIG. 32A

FIG. 32B

FIG. 32C

FIG. 32D

# FIG. 33

P3                               P2

P4                               P1

# FIG. 34

Europäisches
Patentamt
European
Patent Office
Office européen
des brevets

**EUROPEAN SEARCH REPORT**

Application Number

EP 08 16 1359

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 103 43 611 A1 (WALTER AG [DE]) 14 April 2005 (2005-04-14) * the whole document * | 1-6 | INV. G05B19/18 |
| Y | EP 0 664 498 A (FANUC LTD [JP]) 26 July 1995 (1995-07-26) * column 1, line 9 - column 2, line 16 * * column 5, line 14 - column 6, line 28; figure 3 * | 1-6 | |
| A | EP 1 755 010 A (CITIZEN WATCH CO LTD [JP]) 21 February 2007 (2007-02-21) * paragraph [0085] - paragraph [0097]; figures 24,25 * | 1-8 | |

TECHNICAL FIELDS
SEARCHED      (IPC)

G05B

The present search report has been drawn up for all claims

| Place of search | Date of completion of the search | Examiner |
|---|---|---|
| The Hague | 24 November 2008 | Nettesheim, Johannes |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 16 1359

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2008

| Patent document cited in search report | | Publication date | Patent family member(s) | | Publication date |
|---|---|---|---|---|---|
| DE 10343611 | A1 | 14-04-2005 | NONE | | |
| EP 0664498 | A | 26-07-1995 | DE | 69428031 D1 | 27-09-2001 |
| | | | DE | 69428031 T2 | 03-01-2002 |
| | | | WO | 9429777 A1 | 22-12-1994 |
| | | | JP | 3574462 B2 | 06-10-2004 |
| | | | JP | 6348327 A | 22-12-1994 |
| | | | US | 5611032 A | 11-03-1997 |
| EP 1755010 | A | 21-02-2007 | WO | 2005121911 A1 | 22-12-2005 |
| | | | US | 2007241710 A1 | 18-10-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9262742 A
- JP 11104934 A

- JP 2006024174 A